# EUROPEAN PATENT APPLICATION

(11) **EP 4 609 744 A1**
(43) Date of publication of application: **03.09.2025**
(21) Application number: 23896244.3
(22) Date of filing: 27.09.2023
(51) Int. Cl.: A44B 11/25

(54) **BUCKLE ASSEMBLY AND SEAT BELT BUCKLE**

(30) Priority: 30.11.2022 CN 202211529964
(71) Applicant: Autoliv Development AB, 44783 Vargarda (SE)
(72) Inventor: GE, Liang, Shanghai 201807 (CN); WEI, Kezhao, Shanghai 201807 (CN); YU, Licheng, Shanghai 201807 (CN); Jabusch, Ronald, 25336 Elmshorn (DE); LI, Mingyang, Shanghai 201807 (CN)
(74) Representative: Müller Verweyen
(86) International application number: PCT/CN2023/122319
(87) International publication number: WO 2024/114087

(57) **Abstract**

The present invention provides a buckle assembly and a seat belt buckle. The buckle assembly includes a buckle configured to engage with a latch plate to secure a seat belt to a seat. The buckle assembly further includes a force-limiting module connected to the buckle and configured to define a force threshold. The force-limiting module includes: a mandrel having a hollow structure and rotatably supported at two axial ends; a torsion bar positioned in a hollow inner cavity of the mandrel to be arranged coaxially with the mandrel, only a portion of the torsion bar being connected to the mandrel in a co-rotatable manner; and a winding component having a winding portion wound around an outer circumferential surface of the mandrel and a fixing portion fixed to the buckle. When a force applied to the buckle is greater than the force threshold defined by the force-limiting module, the torsion bar undergoes torsional deformation by co-rotating with the mandrel at the only connected portion of the torsion bar, while the winding portion of the winding component gradually unwinds from the outer circumferential surface of the mandrel as the mandrel rotates, so that the buckle can move to increase the distance between the buckle and the force-limiting module.

## Description

### TECHNICAL FIELD

The present invention relates to a safety device for a vehicle, and relates in particular to a buckle assembly for a seat belt and a seat belt buckle.

### BACKGROUND ART

A seat belt for a vehicle is a safety device. The seat belt is used to hold an occupant during a collision, and to avoid a secondary collision between the occupant and a steering wheel, a dashboard, and the like during the collision, or to prevent the occupant from being thrown out of the vehicle during the collision, thereby causing death or injury. The seat belt for a vehicle may also be referred to as a seat safety belt, and is a type of occupant restraint device. Such a seat belt is generally recognized as the most inexpensive and effective safety device, and in many countries, installation of seat belts in vehicles is mandatory.

As is well known, a seat belt restrains an occupant seated on a seat by means of a webbing pulled out from a seat belt retractor and thus is used to protect the occupant by securing the occupant to the seat in the event of a vehicle collision or the like. As one type of seat belt, in the event of a vehicle collision or the like, when an acceleration exceeding a specified value in the horizontal direction acts, the acceleration is detected by an acceleration sensor, and a seat belt locking mechanism is activated, so that the seat belt cannot be pulled out.

However, after a collision occurs, if it is determined that the occupant is already in a safe state, for example, the airbag has already been deployed, it is desirable for the seat belt to be appropriately loosened to reduce the force applied to the chest of the occupant, so as to improve the comfort of the occupant while ensuring the safety of the occupant.

### SUMMARY OF THE INVENTION

The present invention provides a buckle assembly and a seat belt buckle having force-limiting and cushioning functions. Specifically, after a collision occurs, if it is determined that an occupant is already in a safe state, the buckle assembly and the seat belt buckle of the present invention can allow the seat belt to be appropriately loosened to reduce a force applied to the chest of the occupant, thereby improving the comfort of the occupant while ensuring safety.

Provided in one aspect of the present invention is a buckle assembly, comprising
a buckle configured to engage with a latch plate to secure a seat belt to a seat;
wherein,
the buckle assembly further comprises a force-limiting module connected to the buckle and configured to define a force threshold, and
the force-limiting module comprises:
   a mandrel having a hollow structure and rotatably supported at two axial ends;
   a torsion bar positioned in a hollow inner cavity of the mandrel to be arranged coaxially with the mandrel, only a portion of the torsion bar being connected to the mandrel in a co-rotatable manner; and
   a winding component having a winding portion wound around an outer circumferential surface of the mandrel and a fixing portion fixed to the buckle;
   when a force applied to the buckle is greater than the force threshold defined by the force-limiting module, the torsion bar undergoes torsional deformation by co-rotating with the mandrel at the only connected portion of the torsion bar, while the winding portion of the winding component gradually unwinds from the outer circumferential surface of the mandrel as the mandrel rotates, so that the buckle can move to increase the distance between the buckle and the force-limiting module.

According to an embodiment of the present invention, the winding component comprises a connecting end and a linear member, the connecting end is fixed to the mandrel, two ends of the linear member are both fixed to the connecting end, the winding portion is formed by winding a partial segment between the two ends of the linear member around the outer circumferential surface of the mandrel, and a partial segment between the two ends of the linear member that is not wound around the mandrel forms the fixing portion for connecting to the buckle.

According to an embodiment of the present invention, a first end of the torsion bar is provided with a first external spline portion, and an inner side surface of a first end of the mandrel is provided with a first internal spline portion engaging with the first external spline portion.

According to an embodiment of the present invention, a fixing member configured to be fixed to a second end of the torsion bar is further provided, the second end of the torsion bar is provided with a second external spline portion, the fixing member is provided with a second internal spline portion engaging with the second external spline portion, and the fixing member is non-rotatable together with the mandrel.

According to an embodiment of the present invention, the fixing member is configured as a fixing plate, the fixing plate has a boss surrounding the second internal spline portion and protruding in a thickness direction, and a second end of the mandrel is rotatably supported on an outer circumferential surface of the boss.

According to an embodiment of the present invention, the outer circumferential surface of the boss is provided with a threaded portion and a nut threadedly connected to the threaded portion, and the mandrel is shape-fitted to the nut and rotatably connected to the boss via the nut; and
the thickness of the nut is less than the length of the threaded portion on the boss, and when a force applied to the buckle is greater than the force threshold to cause rotation of the mandrel, the nut co-rotates with the mandrel, so that the nut moves on the threaded portion in a direction toward the fixing plate.

According to an embodiment of the present invention, a cover configured to rotatably support the first end of the mandrel is further comprised, and the cover and the fixing plate jointly define an accommodation cavity for accommodating the mandrel and the torsion bar therein.

According to an embodiment of the present invention, the fixing plate is provided with a deformation member fixed thereto, the deformation member has an arc portion comprising a first arc segment, a second arc segment, and a third arc segment, and the third arc segment is located between the first arc segment and the second arc segment and protrudes radially outward relative to the first and second arc segments; and
the arc portion is positioned between the torsion bar and the mandrel in a radial direction of the mandrel, and when a force applied to the buckle is greater than the force threshold to cause rotation of the mandrel, a protrusion provided on an inner circumferential surface of the mandrel rotates in a circumferential direction by a certain angle to move from an inner circumferential surface of the third arc segment past an inner circumferential surface of the first arc segment and/or the second arc segment, thereby increasing the radial dimensions of the traversed first arc segment and/or second arc segment.

According to an embodiment of the present invention, the torsion bar has a hollow structure, and the fixing member passes through a hollow cavity of the torsion bar to fix the torsion bar onto an external component.

Provided in another aspect of the present invention is a seat belt buckle comprising a latch plate and the buckle assembly according to any of the preceding embodiments, the buckle assembly engaging with the latch plate.

### BRIEF DESCRIPTION OF THE DRAWINGS

The features, advantages, and technical effects of exemplary embodiments of the present invention will be described below with reference to the accompanying drawings. In the accompanying drawings, the same reference numbers denote the same elements, where
FIG. 1(a) and FIG. 1(b) schematically illustrate a buckle assembly according to the present invention.
FIG. 2 schematically illustrates the structure of a buckle assembly according to a first embodiment of the present invention.
FIG. 3 schematically illustrates the structure of a mandrel in FIG. 2.
FIG. 4 schematically illustrates the structure of the mandrel and a winding component in FIG. 2.
FIG. 5 schematically illustrates the structure of a buckle assembly according to a second embodiment of the present invention.
FIGS. 6(a) and 6(b) schematically illustrate the structure of some components in FIG. 5.
FIG. 7 schematically illustrates the structure of a buckle assembly according to a third embodiment of the present invention.
FIGS. 8(a) and 8(b) schematically illustrate the structure of some components in FIG. 7.
FIG. 9 schematically illustrates the structure of a buckle assembly according to a fourth embodiment of the present invention.
FIG. 10 schematically illustrates the structure of a winding component in FIG. 9.
FIG. 11 schematically illustrates the structure of a mandrel in FIG. 9.
FIG. 12 schematically illustrates the structure of a buckle assembly according to a fifth embodiment of the present invention.

### DETAILED DESCRIPTION OF PREFERRED EMBODIMENTS

Specific implementations of a buckle assembly and a seat belt buckle according to the present invention will be described below with reference to the accompanying drawings. The following detailed description and the accompanying drawings are used to illustratively explain the principles of the present invention. The present invention is not limited to the described preferred embodiments, and various embodiments described in the present invention can be used individually or in any combination. **The** scope of protection of the present invention is defined by the claims.

**In** addition, terms for spatial relations (such as "upper", "lower", "left", "right", etc.) are used to describe a relative positional relationship between an element and another element shown in the accompanying drawings. Therefore, the terms for spatial relations may be applied to directions different from the directions shown in the accompanying drawings during use. Obviously, although all of these terms for spatial relations refer to the directions shown in the accompanying drawings for ease of explanation, a person skilled in the art will appreciate that directions different from the directions shown in the drawings may be used.

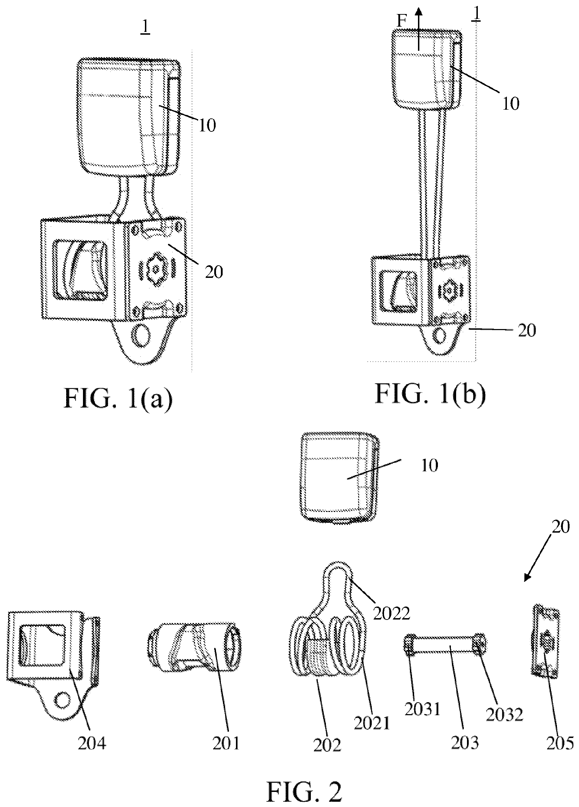

FIG. 1(a) and FIG. 1(b) schematically illustrate a buckle assembly according to the present invention. The buckle assembly according to the present invention is described below with reference to FIG. 1(a) and FIG. 1(b).

As shown in FIG. 1(a) and FIG. 1(b), the present invention provides a buckle assembly 1 including a buckle 10 and a force-limiting module 20, where the buckle 10 is configured to engage with a latch plate (not shown) to secure a seat belt to a seat. As is typically the case, the latch plate can be inserted into the buckle 10 from an open end of the buckle 10 and thus be locked within the buckle 10, and the seat belt connected to the latch plate is likewise fixed to the buckle 10. The force-limiting module 20 is connected to the buckle 10 and configured to define a force threshold. It is noted that the term "force threshold" herein is used to evaluate a force applied to the buckle 10 and accordingly determine whether the buckle 10 will move under the action of the applied force. If the buckle 10 is under no force or is subjected to a force less than the force threshold defined by the force-limiting module 20, then, as shown in FIG. 1(a), the buckle 10 is at a certain position relative to the force-limiting module 20. However, if the buckle 10 is subjected to a force F greater than the force threshold, then the buckle 10 is at another position relative to the force-limiting module 20, as shown in FIG. 1(b). **It** is evident that compared with FIG. 1(a), the distance between the buckle 10 and the force-limiting module 20 increases in FIG. 1(b). In other words, in the scenario shown in FIG. 1(b), since displacement of the buckle 10 reduces the restraint of the seat belt on a seated occupant, the force applied by the seat belt to the chest of the occupant is reduced, thereby preventing excessive tightening of the seat belt from injuring the occupant and improving the comfort of the occupant.

The buckle assembly in a plurality of embodiments of the present invention is described in detail below.

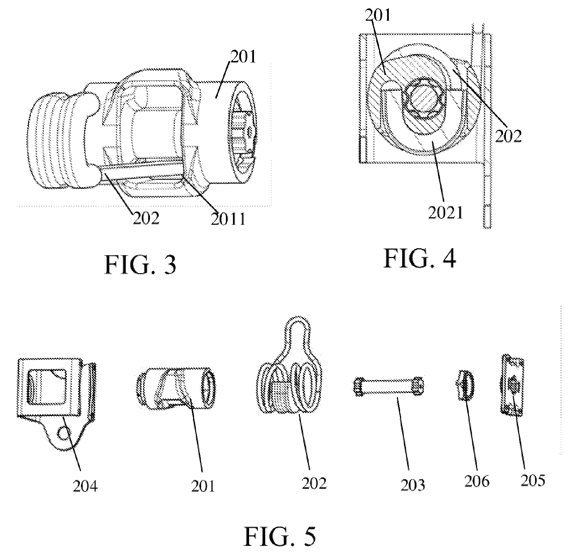

FIG. 2 schematically illustrates the structure of a buckle assembly according to a first embodiment of the present invention. FIG. 3 schematically illustrates the structure of a mandrel in FIG. 2. FIG. 4 schematically illustrates the structure of the mandrel and a winding component in FIG. 2. **The** structure of the buckle assembly according to the first embodiment of the present invention is described below with reference to FIGS. 2 to 4.

As shown in FIG. 2, a force-limiting module 20 of a buckle assembly 1 of the present invention includes a mandrel 201, a winding component 202, and a torsion bar 203. Next, the above-described components in the present embodiment are described in detail.

With reference to FIG. 3 and FIG. 4, in the buckle assembly 1 of the present invention, the mandrel 201 has a hollow structure, and the torsion bar 203 is positioned in a hollow inner cavity of the mandrel 201 to be arranged coaxially with the mandrel 201. The winding component 202 is partially wound around an outer circumferential surface of the mandrel 201 and connected to the buckle 10. To this end, the winding component 202 is configured with a lower portion having a plurality of substantially concentrically arranged coils and an inverted U-shaped upper portion, as shown in FIG. 2. The lower portion serves as a winding portion 2021 wound around the outer circumferential surface of the mandrel 201, and the upper portion serves as a fixing portion 2022 fixed to the buckle 10. As an example, the inverted U-shaped upper portion of the winding component 202 is hooked onto a hook-shaped connecting portion extending from the lower end of the buckle 10 to achieve connection and fixation between the winding component 202 and the buckle 10. Of course, other connection methods (e.g., welding) may also be employed to implement the connection between the winding component and the buckle.

As clearly shown in FIG. 3, the mandrel 201 has a chamber 2011, and the chamber 2011 is substantially a chamber extending in a circumferential direction of the mandrel 201 and has a U-shaped inlet on a front side and an outlet on a rear side. Correspondingly, as clearly shown in FIG. 4, the winding component 202 includes a linear member and a U-shaped connecting end fixed together with the linear member. Specifically, the linear member is originally a straight component, and then the linear member is bent and two ends of the linear member are both fixed to the connecting end. As shown in FIG. 3, the linear member of the winding component 202 enters the chamber 2011 through the inlet of the chamber 2011 and then exits the chamber 2011 through the outlet of the chamber 2011, and a partial segment thereof subsequently winds around the outer circumferential surface of the mandrel 201 to form the winding portion 2021. At the same time, a partial segment between the two ends of the linear member that is not wound around the mandrel 201 forms the fixing portion 2022 for connecting to the buckle 10. Moreover, as the linear member of the winding component 202 enters the chamber 2011 of the mandrel 201, the U-shaped connecting end is engaged with the U-shaped inlet of the chamber 2011. **In** other words, the U-shaped connecting end of the winding component 202 is shape-fitted to the U-shaped inlet of the chamber 2011 on the mandrel 201 to achieve the connection between the winding component 202 and the mandrel 201. It can be understood that in the scenario shown in FIG. 1(b), when the buckle 10 is subjected to the force F, since the winding component 202 is fixed to the buckle 10 at the fixing portion 2022 thereof, the winding portion 2021 of the winding component 202 is pulled under the action of the force F to gradually unwind from the outer circumferential surface of the mandrel 201, and simultaneously, under a friction force between the outer circumferential surface thereof and the winding portion 2021 of the winding component 202, the mandrel 201 rotates as the winding portion 2021 unwinds.

In the first embodiment of the present invention, as shown in FIG. 2, the buckle assembly 1 may further include a frame 204 and a fixing plate 205, the fixing plate 205 is fixed to the right side of the frame 204, and the frame 204 serves as an accommodation member to accommodate the mandrel 201 and the torsion bar 203 therein, as shown in FIGS. 1(a) and 1(b). In the embodiment shown in FIG. 2, a fixing hole may be provided on the lower side of the frame 204. The fixing hole, combined with a fixing bolt, allows the force-limiting module to be fixed to a predetermined position on a vehicle seat, e.g., a seat cushion of the vehicle seat. The fixing plate 205, as a fixing member, is configured to fix a second end 2032 of the torsion bar 203. For example, the second end 2032 of the torsion bar 203 is provided with a second external spline portion, the fixing plate 205 is provided with a second internal spline portion engaging with the second external spline portion, the fixing plate 205 is further provided with a boss surrounding the second internal spline portion and protruding in a thickness direction (shown as being located on a left side surface of the fixing plate 205 in FIG. 2), and the fixing plate 205 is configured to be non-rotatable together with the mandrel 201, such that the second end 2032 of the torsion bar 203 splined to the fixing plate 205 is also configured to be non-rotatable together with the mandrel 201.

A left end of the mandrel 201 is rotatably supported on the left side of the frame 201, and a right end of the mandrel 201 is rotatably supported on the boss 2051 of the fixing plate 205. Of course, the left end and the right end of the mandrel 201 may also alternatively be rotatably supported in other ways.

**In** addition, a first end 2031 of the torsion bar 203 is provided with a first external spline portion, a first internal spline portion engaging with the first external spline portion is provided on an inner side surface at the left end of the mandrel 201, and the torsion bar 203 is splined to the mandrel 201 at the first end 2031 to enable co-rotation with the mandrel 201 at the first end 2031 of the torsion bar 203.

Of course, this is merely an example. As an alternative example to the arrangement where the left end of the torsion bar can co-rotate with the mandrel, or as an additional configuration other than this arrangement, the torsion bar may also be rotatably connected to the mandrel at any position between the two ends thereof. **It** can be understood that if the force F applied to the buckle 10 causes the winding portion 2021 of the winding component 202 to be pulled and thus gradually unwind from the outer circumferential surface of the mandrel 201, then the mandrel 201, under the friction force between the outer circumferential surface thereof and the winding portion 2021 of the winding component 202, will rotate as the winding portion 2021 unwinds. Furthermore, when the mandrel 201 rotates, the first end 2031 of the torsion bar 203 will also rotate with the mandrel 201, while the second end 2032 of the torsion bar 203 is fixed, so that the torsion bar 203 undergoes torsional deformation. **That** is, the force F applied to the buckle 10 needs to be at least sufficient to cause torsional deformation of the torsion bar 203, i.e., in the buckle assembly 1 of the first embodiment of the present invention, the force threshold of the force-limiting module 20 is set at least by the torsion bar 203.

Therefore, in the buckle assembly of the present invention, by providing the force-limiting module, when the force applied to the buckle is greater than the force threshold defined by the force-limiting module, the torsion bar can undergo torsional deformation by co-rotating with the mandrel at the only connected portion of the torsion bar. At the same time, the winding portion of the winding component gradually unwinds from the outer circumferential surface of the mandrel as the mandrel rotates, so that the buckle can move to increase the distance between the buckle and the force-limiting module. As a result, while the pulled-out length of the seat belt remains unchanged, the end of the seat belt connected to the latch plate is displaced so as to reduce the restraint applied to the occupant, and reduce the force applied to the chest of the occupant by the seat belt, thereby preventing excessive tightening of the seat belt from injuring the occupant and improving the comfort of the occupant.

Therefore, the buckle assembly of the present invention has force-limiting and cushioning functions. Specifically, after a collision occurs, if it is determined that the occupant is already in a safe state, the seat belt can be appropriately loosened to reduce the force applied to the chest of the occupant, thereby improving the comfort of the occupant while ensuring safety.

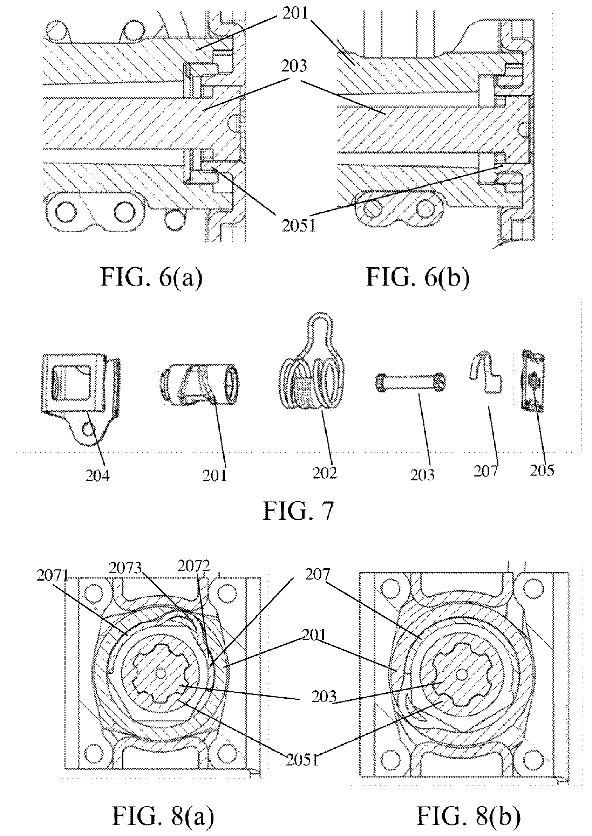

FIG. 5 schematically illustrates the structure of a buckle assembly according to a second embodiment of the present invention. FIGS. 6(a) and 6(b) schematically illustrate the structure of some components in FIG. 5. With reference to FIGS. 5, 6(a), and 6(b), the second embodiment of the present invention is described below.

Similar to the first embodiment of the present invention, the buckle assembly includes a buckle 10 and a force-limiting module 20, the force-limiting module 20 including a mandrel 201, a winding component 202, and a torsion bar 203. The mandrel 201 has a hollow structure, the torsion bar 203 is positioned in a hollow inner cavity of the mandrel 201 to be coaxially arranged with the mandrel 201, and the torsion bar 203 can co-rotate with the mandrel 201 at a first end 2031 thereof. The buckle assembly 1 further includes a frame 204 and a fixing plate 205, the fixing plate 205 is fixed to the right side of the frame 204, and the frame 204 serves as an accommodation member to accommodate the mandrel 201 and the torsion bar 203 therein. The fixing plate 205, as a fixing member, is configured to be fixed to a second end 2032 of the torsion bar 203, and the fixing plate 205 is configured to be non-rotatable together with the mandrel 201. A left end of the mandrel 201 is rotatably supported on the left side of the frame 201, a right end of the mandrel 201 is rotatably supported on a boss 2051 of the fixing plate 205, and the first end 2031 of the torsion bar 203 is configured to connect to the mandrel 201 to enable co-rotation with the mandrel 201 at the first end 2031 of the torsion bar 203.

**The** following mainly focuses on the differences between the second embodiment and the first embodiment, and the similarities will not be described herein again to avoid redundancy.

As shown in FIG. 5, in the second embodiment of the present invention, the force-limiting module 20 further includes a nut 206, and a threaded portion is provided on an outer circumferential surface of the boss 2051 of the fixing plate 205 to connect to the nut 206. Moreover, as shown in FIGS. 6(a) and 6(b), the mandrel 201 is shape-fitted to the nut 206 and is rotatably connected to the boss 2051 via the nut 206. As an example, the nut 206 has a hexagonal outer periphery, and correspondingly, a hexagonal inner surface is provided at the right end of the mandrel 201 to fit with the shape of the hexagonal nut 206. **It** should be noted that the relative engagement between the mandrel 201 and the nut 206 is used to ensure that no relative rotation occurs between the mandrel 201 and the nut 206, that is, to ensure that the nut 206 does not undergo relative displacement relative to the mandrel 201 in the circumferential direction of the mandrel 201.

Additionally, as shown in FIGS. 6(a) and 6(b), the thickness of the nut 206 is less than the length of the threaded portion on the boss 2051, so as to ensure that the nut 206 can be properly displaced on the boss 2051.

In the second embodiment of the present invention, when a force applied to the buckle 10 is greater than a force threshold defined by the force-limiting module 20 to cause rotation of the mandrel 201, the nut 206 co-rotates with the mandrel 201. When the nut 206 co-rotates with the mandrel 201, the nut 206 further moves on the threaded portion of the fixing plate 205 in a direction toward the fixing plate 205 until the nut reaches the rightmost end of the threaded portion of the fixing plate 205. Then, the nut 206 and the mandrel 201 together stop rotating. In other words, the nut 206 moves on the threaded portion of the boss 2051 from the position shown in FIG. 6(a) to the position shown in FIG. 6(b).

Hence, in the second embodiment of the present invention, since the force-limiting module is further provided with the nut that is threadedly connected to the boss of the fixing plate and shape-fitted to the mandrel, the amount of rotation of the mandrel is limited by the amount of displacement of the nut on the boss, thereby avoiding excessive displacement of the buckle caused by excessive rotation of the mandrel, and thus preventing the seat belt from being unable to apply a sufficient restraint force to the occupant. Therefore, the buckle assembly in the second embodiment of the present invention further improves safety while improving the comfort of the occupant.

FIG. 7 schematically illustrates the structure of a buckle assembly according to a third embodiment of the present invention. FIGS. 8(a) and 8(b) schematically illustrate the structure of some components in FIG. 7. With reference to FIGS. 7, 8(a), and 8(b), the third embodiment of the present invention is described below.

Similar to the first embodiment of the present invention, the buckle assembly includes a buckle 10 and a force-limiting module 20, the force-limiting module 20 including a mandrel 201, a winding component 202, and a torsion bar 203. **The** mandrel 201 has a hollow structure, the torsion bar 203 is positioned in a hollow inner cavity of the mandrel 201 to be coaxially arranged with the mandrel 201, and the torsion bar 203 can co-rotate with the mandrel 201 at a first end 2031 thereof. **The** buckle assembly 1 further includes a frame 204 and a fixing plate 205, the fixing plate 205 is fixed to the right side of the frame 204, and the frame 204 serves as an accommodation member to accommodate the mandrel 201 and the torsion bar 203 therein. **The** fixing plate 205, as a fixing member, is configured to be fixed to a second end 2032 of the torsion bar 203, and the fixing plate 205 is configured to be non-rotatable together with the mandrel 201. A left end of the mandrel 201 is rotatably supported on the left side of the frame 201, a right end of the mandrel 201 is rotatably supported on a boss 2051 of the fixing plate 205, and the first end 2031 of the torsion bar 203 is configured to connect to the mandrel 201 to enable co-rotation with the mandrel 201 at the first end 2031 of the torsion bar 203.

**The** following mainly focuses on the differences between the third embodiment and the first embodiment, and the similarities will not be described herein again to avoid redundancy.

As shown in FIG. 7, the force-limiting module further includes a deformation member 207 fixed to the fixing plate 205. For example, the deformation member 207 is snapped into the fixing plate 205 at one end thereof. As shown in FIG. 8(a), the deformation member 207 is substantially an arc-shaped member, and the deformation member 207 includes a first arc segment 2071 on the left side, a second arc segment 2072 on the right side, and a third arc segment 2073 in the middle. **The** third arc segment 2073 protrudes radially outward relative to the first arc segment 2071 and the second arc segment 2072. Moreover, an arc portion formed by the first arc segment 2071, the second arc segment 2072, and the third arc segment 2073 is positioned between the torsion bar 203 and the mandrel 201 in a radial direction of the mandrel 201. When the buckle 10 is subjected to no force or is subjected to a force less than a force threshold, as shown in FIG. 8(a), a protrusion on the inner circumferential surface of the mandrel 201 is located at an inner circumferential surface of the third arc segment 2073, and the protrusion of the mandrel 201 is at least partially located at a more radially outward position than the first arc segment 2071 and the second arc segment 2072. When a force applied to the buckle 10 is greater than the force threshold to cause rotation of the mandrel 201, as shown in FIG. 8(b), the protrusion on the inner circumferential surface of the mandrel 201 rotates in a circumferential direction by at least one full revolution to move from the inner circumferential surface of the third arc segment 2073 past the inner circumferential surfaces of both the first arc segment 2071 and the second arc segment 2072, thereby increasing the radial dimensions of the traversed first arc segment 2071 and second arc segment 2072. Of course, the design shown in FIG. 8(b) is merely an example. The mandrel 201 is not limited to rotating one revolution or multiple revolutions. The protrusion on the inner circumferential surface of the mandrel 201 may also rotate in a circumferential direction through a certain angle to move from the inner circumferential surface of the third arc segment 2073 past the inner circumferential surface of the first arc segment 2071, thereby increasing the radial dimension of the traversed first arc segment 2071; alternatively, the protrusion on the inner circumferential surface of the mandrel 201 may also rotate in a circumferential direction through a certain angle to move from the inner circumferential surface of the third arc segment 2073 past the inner circumferential surface of the second arc segment 2072, thereby increasing the radial dimension of the traversed second arc segment 2072.

It can be understood that the protrusion on the inner circumferential surface of the mandrel 201 increases the radial dimension of the first arc segment 2071 and/or the second arc segment 2072 traversed by the protrusion. Since the mandrel 201, when attempting to rotate, has to resist both the torsional deformation of the torsion bar 203 and the friction force between the mandrel 201 and the deformation member 207, the mandrel 201 rotates more slowly compared to the first embodiment of the present invention, thereby ensuring that the buckle 10 moves slowly away from the limiting unit. In other words, the force applied to the buckle 10 must overcome not only the torsional deformation of the torsion bar 203 but also the friction force between the protrusion on the inner circumferential surface of the mandrel 201 and the first arc segment 2071 and/or the second arc segment 2072. It is to be noted that the deformation member provided in the third embodiment of the present invention functions only during an initial phase of rotation of the mandrel 201. This design considers the following scenarios: when a vehicle collision has just occurred and an airbag has not yet deployed (i.e., a first phase), the occupant is primarily protected by the force of the seat belt alone to prevent the occupant from leaving the seat, and when the airbag is fully deployed (i.e., a second phase), both the seat belt and the airbag jointly protect the occupant. For the buckle assembly in the third embodiment of the present invention, in the first phase, both the torsion bar and the deformation member are used to jointly restrict movement of the buckle, and in the second phase, considering that the airbag applies a restraining force to the occupant, only the torsion bar is used to restrict movement of the buckle. As a result, the forces acting on the occupant in the first phase and the second phase are substantially equal, preventing excessive changes in the force applied to the occupant within a short time, and accordingly further improving the comfort of the occupant.

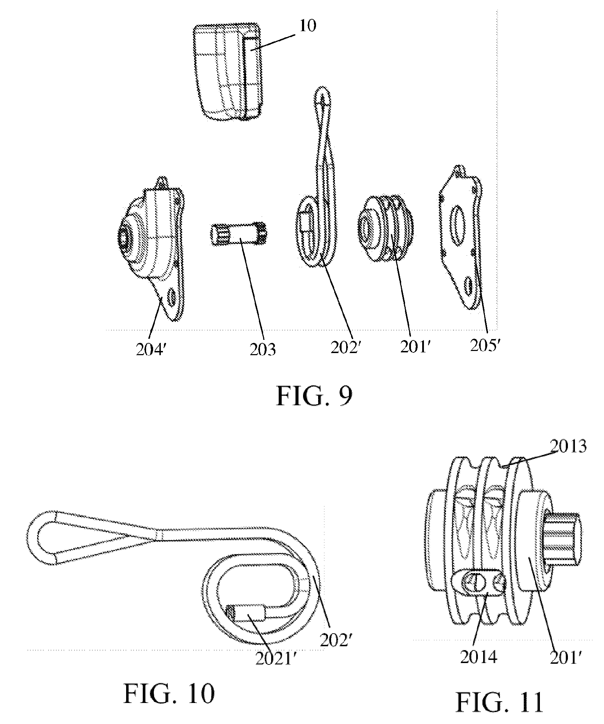

FIG. 9 schematically illustrates the structure of a buckle assembly according to a fourth embodiment of the present invention. FIG. 10 schematically illustrates the structure of a winding component in FIG. 9. FIG. 11 schematically illustrates the structure of a mandrel in FIG. 9. With reference to FIGS. 9, 10, and 11, the fourth embodiment of the present invention is described below.

Similar to the first embodiment of the present invention, the buckle assembly includes a buckle 10 and a force-limiting module 20, the force-limiting module 20 including a mandrel 201', a winding component 202', and a torsion bar 203. **The** mandrel 201' has a hollow structure, the torsion bar 203 is positioned in a hollow inner cavity of the mandrel 201 to be coaxially arranged with the mandrel 201', and the torsion bar 203 can co-rotate with the mandrel 201' at a first end 2031 thereof.

**The** following mainly focuses on the differences between the fourth embodiment and the first embodiment, and the similarities will not be described herein again to avoid redundancy.

As shown in FIG. 9, as an alternative example for the frame 204 in the first embodiment, in the fourth embodiment of the present invention, a cover 204' is configured to rotatably support a left end of the mandrel 201', a left side surface of a fixing plate 205' is not provided with a boss, and a right end of the mandrel 201' is rotatably supported at an opening of the fixing plate 205'. **The** fixing plate 205' is fixed to the right side of the cover 204', such that the cover 204' and the fixing plate 205' jointly define an accommodation cavity for accommodating the mandrel 201' and the torsion bar 203 therein. **The** fixing plate 205', as a fixing member, is configured to be fixed to a right end of the torsion bar 203, and the fixing plate 205' is configured to be non-rotatable together with the mandrel 201, so that the right end of the torsion bar 203 fixed to the fixing plate 205' is likewise non-rotatable together with the mandrel 201. Also, a right end of the mandrel 201 is rotatably supported on the fixing plate 205', and a left end of the torsion bar 203 is configured to connect to the mandrel 201' to enable co-rotation with the mandrel 201' at the left end of the torsion bar 203.

As shown in FIG. 11, the mandrel 201' is provided, on an outer circumferential surface thereof, with a plurality of tracks configured to guide winding and/or unwinding operations (described later) of the winding component 202' on the mandrel 201'. Furthermore, the mandrel 201' is also provided with two openings for a linear member of the winding component 202' to pass through. Correspondingly, as clearly shown in FIG. 10, the winding component 202' includes a linear member and a straight connecting end fixed to the linear member. Specifically, the two ends of the linear member are both fixed to the connecting end, and the connecting end is an expanded end portion relative to the linear member. **It** can be understood that the linear member of the winding component 202' passes through one opening of the mandrel 201', and then passes through the other opening of the mandrel 201', and a partial segment thereof subsequently winds around the outer circumferential surface of the mandrel 201' to form a winding portion. At the same time, a partial segment between the two ends of the linear member that is not wound around the mandrel 201' forms a fixing portion 2022 for connecting to the buckle 10. Moreover, as the linear member of the winding component 202' passes through the first opening of the mandrel 201', the connecting end in the form of an expanded end is engaged at the opening; in other words, the connecting end of the winding component 202' is snap-fitted to one opening on the mandrel 201' to achieve connection between the winding component 202' and the mandrel 201'. **It** can be understood that when the buckle 10 is subjected to a force **F,** since the winding component 202' is fixed, at the fixing portion thereof, to the buckle 10, a winding portion 2021' of the winding component 202' is pulled under the action of the force F to gradually unwind from the outer circumferential surface of the mandrel 201' along the tracks on the mandrel 201', and simultaneously, the mandrel 201', under a friction force between the outer circumferential surface thereof and the winding portion 2021 of the winding component 202', rotates as the winding portion 2021' unwinds.

In addition, a fixing hole may be provided on the lower side of the cover 204'. The fixing hole, combined with a fixing bolt, can fix the force-limiting module to a predetermined position on a vehicle seat, e.g., a seat cushion of the vehicle seat.

It can be understood that compared with the first embodiment of the present invention, in the fourth embodiment of the present invention, by providing the cover and the fixing plate to accommodate the mandrel and the torsion bar, the volume of the force-limiting module is reduced; also, the mandrel is provided with tracks for winding and/or unwinding operations of the winding component, ensuring convenient and smooth execution of winding and/or unwinding operations of the winding component.

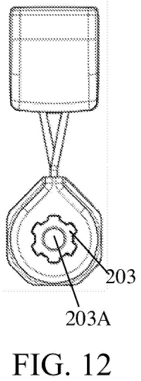

FIG. 12 schematically illustrates the structure of a buckle assembly according to a fifth embodiment of the present invention. The fifth embodiment according to the present invention will be described below with reference to FIG. 12.

The fifth embodiment of the present invention, as an improvement over the fourth embodiment of the present invention, does not provide a mounting hole at a lower side of the cover 204'. Correspondingly, the torsion bar 203 has a hollow structure, a fixing hole 203A extending circumferentially is provided in the axial direction of the torsion bar 203, and the fixing hole 203A, combined with a fixing bolt, can fix the force-limiting module to a predetermined position on a vehicle seat, e.g., a seat cushion of the vehicle seat.

It can be understood that compared with the fourth embodiment of the present invention, in the fifth embodiment of the present invention, by eliminating the mounting hole on the cover, the volume of the cover is reduced, thereby further reducing the volume of the force-limiting module.

Although the embodiments of the present invention are described with the winding component configured to include a linear member and a connecting end, it should be noted that the winding component of the present invention is not limited thereto, and the winding component can certainly be provided in other forms. For example, the winding component may include a sheet-like member (similar to a webbing), and both ends of the sheet-like member are fixedly connected to the mandrel and the buckle, respectively.

Another aspect of the present invention further provides a seat belt buckle including a latch plate and the buckle assembly of the present invention, the buckle assembly engaging with the latch plate. The advantages described with reference to the buckle assembly of the present invention likewise apply to the seat belt buckle of the present invention.

As described above, although the exemplary embodiments of the present invention have been described with reference to the accompanying drawings in the description, the present invention is not limited to the aforementioned specific embodiments, and the scope of protection of the present invention should be defined by the claims and equivalent meanings thereof.

## Claims

1. A buckle assembly (1), comprising
a buckle (10) configured to engage with a latch plate to secure a seat belt to a seat;
**characterized in that**:
the buckle assembly (1) further comprises a force-limiting module (20) connected to the buckle (10) and configured to define a force threshold, and
the force-limiting module (20) comprises:
a mandrel (201) having a hollow structure and rotatably supported at two axial ends;
a torsion bar (203) positioned in a hollow inner cavity of the mandrel (201) to be arranged coaxially with the mandrel (201), only a portion of the torsion bar (203) being connected to the mandrel (201) in a co-rotatable manner; and
a winding component (202) having a winding portion (2021) wound around an outer circumferential surface of the mandrel (201) and a fixing portion (2022) fixed to the buckle (10); and
when a force applied to the buckle (10) is greater the force threshold defined by the force-limiting module (20), the torsion bar (203) undergoes torsional deformation by co-rotating with the mandrel (201) at the only connected portion of the torsion bar, while the winding portion (2021) of the winding component (202) gradually unwinds from the outer circumferential surface of the mandrel (201) as the mandrel (201) rotates, so that the buckle (10) can move to increase the distance between the buckle (10) and the force-limiting module (20).

2. **The** buckle assembly (1) according to claim 1, wherein the winding component (202) comprises a connecting end and a linear member, the connecting end is fixed to the mandrel (201), two ends of the linear member are both fixed to the connecting end, the winding portion (2021) is formed by winding a partial segment between the two ends of the linear member around the outer circumferential surface of the mandrel (201), and a partial segment between the two ends of the linear member that is not wound around the mandrel (201) forms the fixing portion (2022) for connecting to the buckle (10).

3. The buckle assembly (1) according to claim 1, wherein a first end (2031) of the torsion bar (203) is provided with a first external spline portion, and an inner side surface of a first end of the mandrel (201) is provided with a first internal spline portion engaging with the first external spline portion.

4. The buckle assembly (1) according to claim 3, wherein a fixing member configured to be fixed to a second end (2032) of the torsion bar (203) is further provided, the second end (2032) of the torsion bar (203) is provided with a second external spline portion, the fixing member is provided with a second internal spline portion engaging with the second external spline portion, and the fixing member is non-rotatable together with the mandrel (201).

5. The buckle assembly (1) according to claim 4, wherein the fixing member is configured as a fixing plate (205), the fixing plate (205) has a boss (2051) surrounding the second internal spline portion and protruding in a thickness direction, and a second end of the mandrel (201) is rotatably supported on an outer circumferential surface of the boss (2051).

6. The buckle assembly (1) according to claim 5, wherein the outer circumferential surface of the boss (2051) is provided with a threaded portion and a nut (206) threadedly connected to the threaded portion, and the mandrel (201) is shape-fitted to the nut (206) and rotatably connected to the boss (2051) via the nut (206); and
the thickness of the nut (206) is less than the length of the threaded portion on the boss (2051), and when a force applied to the buckle (10) is greater than the force threshold to cause rotation of the mandrel (201), the nut (206) co-rotates with the mandrel (201), so that the nut (206) moves on the threaded portion in a direction toward the fixing plate (205).

7. The buckle assembly (1) according to claim 5, wherein a cover (204') configured to rotatably support the first end of the mandrel (201) is further comprised, and the cover (204') and the fixing plate (205) jointly define an accommodation cavity for accommodating the mandrel (201) and the torsion bar (203) therein.

8. The buckle assembly (1) according to claim 5, wherein the fixing plate (205) is provided with a deformation member (207) fixed thereto, the deformation member (207) has an arc portion comprising a first arc segment (2071), a second arc segment (2072), and a third arc segment (2073), and the third arc segment (2073) is located between the first arc segment (2071) and the second arc segment (2072) and protrudes radially outward relative to the first and second arc segments; and
the arc portion is positioned between the torsion bar (203) and the mandrel (201) in a radial direction of the mandrel (201), and when a force applied to the buckle (10) is greater than the force threshold to cause rotation of the mandrel (201), a protrusion provided on an inner circumferential surface of the mandrel (201) rotates in a circumferential direction by a certain angle to move from an inner circumferential surface of the third arc segment (2073) past an inner circumferential surface of the first arc segment (2071) and/or the second arc segment (2072), thereby increasing the radial dimensions of the traversed first arc segment (2071) and/or second arc segment (2072).

9. **The** buckle assembly (1) according to claim 7, wherein the torsion bar (203) has a hollow structure, and the fixing member passes through a hollow cavity of the torsion bar (203) to fix the torsion bar onto an external component.

10. A seat belt buckle, **characterized by** comprising a latch plate and the buckle assembly (1) according to any one of claims 1-9, the buckle assembly engaging with the latch plate.
